# EUROPEAN PATENT SPECIFICATION

(11) **EP 3 263 380 B1**
(45) Date of publication and mention of the grant of the patent: **03.04.2019**
(21) Application number: 17176968.0
(22) Date of filing: 20.06.2017
(51) Int. Cl.: B60K 6/383

(54) **TRANSMISSION APPARATUS FOR AN AUTOMATED MANUAL TRANSMISSION, POWER UNIT AND THE RELATED VEHICLE COMPRISING SAID APPARATUS**
GETRIEBEVORRICHTUNG FÜR AUTOMATISIERTES HANDSCHALTGETRIEBE, ANTRIEBSEINHEIT UND ZUGEHÖRIGES FAHRZEUG MIT DER BESAGTEN VORRICHTUNG
APPAREIL DE TRANSMISSION POUR TRANSMISSION MANUELLE AUTOMATISÉE, UNITÉ DE PUISSANCE ET VÉHICULE ASSOCIÉ COMPRENANT LEDIT APPAREIL

(30) Priority: 27.06.2016 IT UA20164676
(43) Date of publication of application: 03.01.2018
(73) Proprietor: Magneti Marelli S.p.A., 20011 Corbetta (MI) (IT)
(72) Inventor: GUSMERINI, Luca, I-20011 Corbetta, MILANO (IT); DENTICI, Ignazio, I-20011 Corbetta, MILANO (IT)
(74) Representative: Mitola, Marco

(56) References cited:
- EP-A1- 2 682 293
- WO-A1-2015/052389
- US-A1- 2002 173 401

## Description

### SCOPE

The present invention relates to a transmission apparatus for vehicles equipped with an automated manual transmission (AMT), a power unit and a related vehicle equipped with said transmission apparatus. In particular, the vehicles may be either hybrid vehicles (HEVs), equipped with an internal combustion engine and an electric motor, or electric vehicles (BEVs).

### STATE OF THE ART

As is known, transmission apparatuses with automated manual transmission have some disadvantages and limitations.

In particular, the gear change phase is not optimized, since the user is able to clearly notice a torque gap due to the disengagement and subsequent engagement of the transmission.

In order to overcome this disadvantage, it is known in the art to provide the transmission with an auxiliary electric machine that provides torque to the wheels so as to fill the torque gap which otherwise would be noticed during the gear shift phase in an automated manual transmission. Said auxiliary electric machine may also be used for other purposes.

For example, if it is connected downstream of the transmission, it may be used to charge the vehicle's battery pack, for example by means of regenerative braking. In addition, after having first disconnected the internal combustion engine, the auxiliary electric machine may allow the vehicle to run fully in electric mode or even only when reversing.

The same auxiliary electric machine may be properly connected upstream from the transmission so as to enable the startup function of the internal combustion engine upon disconnection of the transmission, but also to have a rapid synchronization of the transmission during the gear change phase, with particular reference to the downshift phase.

Furthermore, the auxiliary electric machine may be used to assist the operation of the internal combustion engine, for example during the release phase of the accelerator, in order to reduce fuel consumption or even to increase its performance or, for example, to overcome the delayed response, so-called 'turbo-lag', typical of supercharged engines.

In order to optimize the overall operation of the transmission and the internal combustion engine, the auxiliary unit must be frequently and repeatedly connected both upstream and downstream of the transmission, depending on the function to be performed and the contingent operating conditions of the vehicle, which may depend both on the vehicle's route and the driving and traffic conditions.

There are known solutions in the art that may alternatively connect the auxiliary electric machine upstream and/or downstream of the transmission in order to perform the cited functions.

The known art solutions are, however, quite complex, bulky and costly to achieve, as they provide actuators that considerably increase the mass and bulk of the vehicle's transmission.

The increase in mass and cost thus risks canceling the benefits of fuel consumption and pollutant emissions obtainable from the use of the auxiliary electric machine.

In addition, the known solutions, due to the relative mechanical complexity, may require frequent maintenance and may be subject to premature failure. Such prior art solutions are known from EP 2682293 A1.

### PRESENTATION OF THE INVENTION

The need for resolving the disadvantages and limitations cited with reference to the known art is therefore felt.

This requirement is met by a transmission apparatus for vehicles equipped with an automated manual transmission in accordance with claim 1.

### DESCRIPTION OF THE FIGURES

Further features and advantages of the present invention will become more understandable from the following description of its preferred and non-limiting embodiments, wherein:

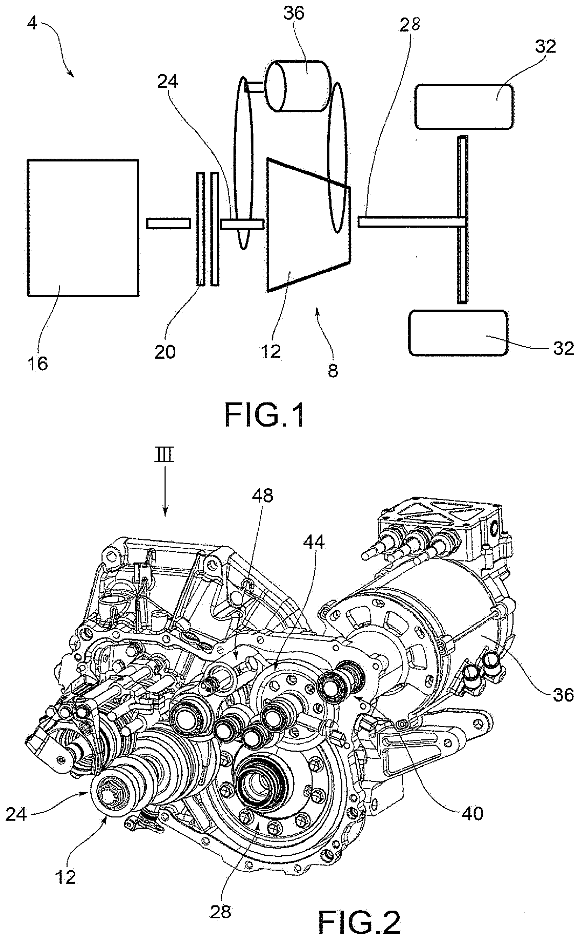

- figure 1 is a schematic view of a power unit according to the present invention;
- figure 2 is a perspective view of a transmission apparatus of a power unit according to an embodiment of the present invention;

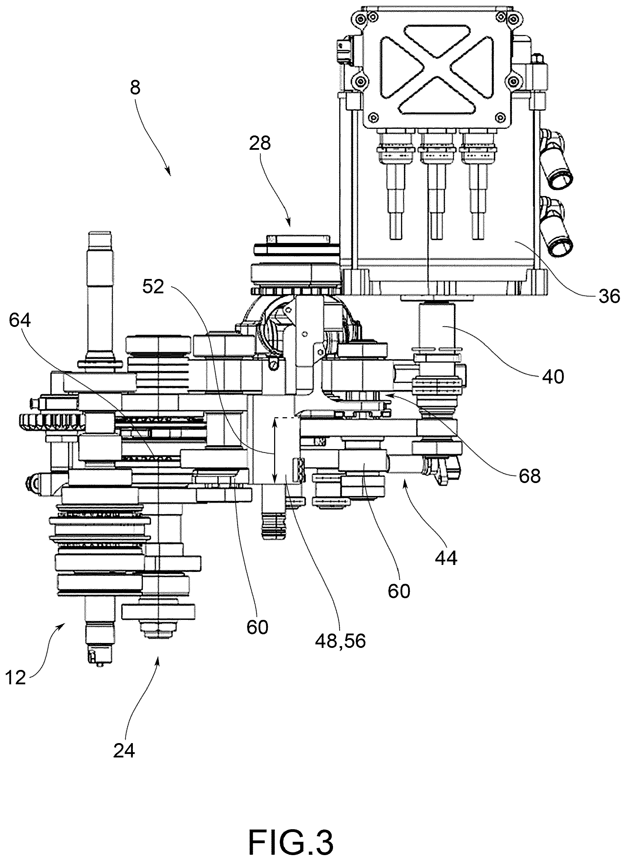

- figure 3 is a view of the transmission apparatus of figure 2, from the side of arrow III of figure 2, in a configuration of disengagement;
- figure 4 is a top view of the transmission apparatus according to an embodiment of the present invention in one configuration of engagement upstream of the automated manual transmission;
- figure 5 is a top view of the transmission apparatus according to an embodiment of the present invention, in a configuration of engagement downstream of the automated manual transmission.

The elements or parts of elements in common between the embodiments described hereinafter will be indicated by the same numerical references.

### DETAILED DESCRIPTION

With reference to the aforementioned figures, collectively indicated at 4 is a schematic overall view of a power unit comprising a transmission apparatus 8 for vehicles equipped with automated manual transmission 12 (AMT) and an internal combustion engine 16.

For the purposes of the present invention, the type of internal combustion engine used in the power unit is not indicated, meaning any type of internal combustion engine, both in the Otto cycle and in the diesel cycle.

The internal combustion engine 16 has a drive shaft which may be mechanically connected to an input shaft of the transmission apparatus 8 by means of a clutch 20, in a known manner.

The transmission apparatus 8 comprises the automated manual transmission 12, equipped with an input shaft 24 and an output shaft 28.

The input shaft 24, as seen, is configured to be selectively connected to the internal combustion engine 16, for example by means of said clutch 20.

The output shaft 28 is configured in a manner to be mechanically connected to at least one drive wheel 32 of a vehicle.

The transmission apparatus 8 further comprises an auxiliary electric machine 36 having an auxiliary shaft 40 and an auxiliary transmission 44 selectively connectable to the input shaft 24 and/or to the output shaft 28 of the automated manual transmission 12.

Generally, the auxiliary electric machine 36 is an electric machine that may operate both as a motor and a generator to provide torque as needed and to generate electric power, for example during the braking or release phase, as better described below.

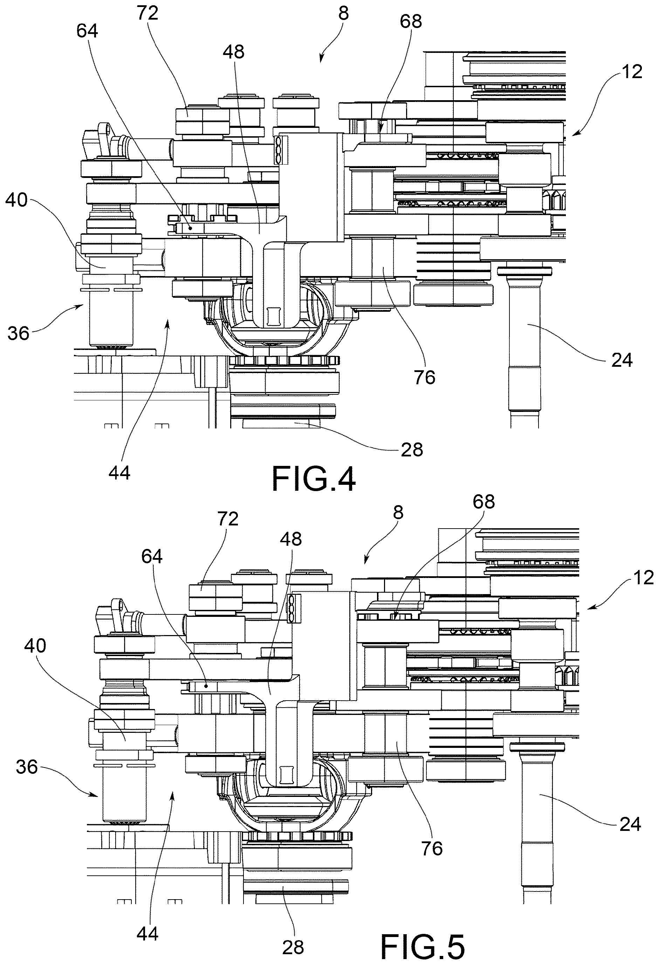

The auxiliary transmission 44 comprises a single transmission selector 48 movable in three positions, wherein:
- in a first upstream engagement position (figure 4), a mechanical connection is made between the auxiliary shaft 40 of the auxiliary electric machine 36 and said input shaft 24 of the transmission apparatus 8,
- in a second disengagement position, the auxiliary shaft 40 of the auxiliary electric machine 36 is mechanically disconnected from said input 24 and output 28 shafts,
- in a third downstream engagement position (figure 5), a mechanical connection is made between the auxiliary shaft 40 of the auxiliary electric machine 36 and said output shaft 28.

According to one embodiment, said single transmission selector 48 is movable along an actuating stroke between said first, second and third positions.

Preferably, said single transmission selector 48 is movable along an axial actuating stroke 52, wherein said first and third positions are located at respective end strokes of the axial actuating stroke 52, and wherein said second position is intermediate or interposed between said end strokes.

For example, said single transmission selector 48 comprises a slider 56, movable between said first, second and third positions, the slider 56 being equipped with a pair of gears 60 suitable to engage and disengage with the corresponding first and second mechanical elements 64, 68 operatively connected to the input shaft 24 and the output shaft 28 respectively.

According to one embodiment, said gears 60 comprise frontal-engagement gears suitable to mesh with the corresponding first and second mechanical elements 64, 68 operatively connected to the input shaft 24 and to the output shaft 28 respectively in the first and in the third engagement positions.

Preferably the front engagements allow the engagement in a direction of engagement parallel to said axial actuating stroke 52.

The auxiliary transmission 44 comprises at least a first auxiliary shaft 72 and a second auxiliary shaft 76, wherein the first auxiliary shaft 72 is integral in rotation with the first mechanical element 64 and the second auxiliary shaft 76 is integral in rotation with the second mechanical element 68.

Said single transmission selector 48 comprises an actuator that moves it to said three positions; the transmission apparatus 8 comprises a processing and control unit (not shown) which controls the actuator of the transmission selector 48 and the automated manual transmission 12.

In this way, it is possible to synchronize the intervention of the auxiliary electric machine 36 according to the operation of the automated manual transmission.

The operation of a transmission apparatus and a power unit according to the present invention will now be described.

In particular, in a standard operating condition, i.e. in the second disengagement position, the auxiliary shaft 40 of the auxiliary electric machine 36 is mechanically disconnected from the input 24 and output 28 shafts. In this operating condition, both the internal combustion engine 16 and the automated manual transmission 12 work without receiving any auxiliary power from the auxiliary electric machine 36 which is unable to provide torque, operating as a motor, nor to receive torque, operating as a generator.

If necessary, depending on the operating condition of the vehicle, it may pass into the first upstream engagement condition (figure 4), wherein a mechanical connection is made between the auxiliary shaft 40 of the auxiliary electric machine 36 and the input shaft 24. Such condition is obtained by actuating the transmission selector 48 which, translating in the axial actuating stroke 52, makes the mechanical connection between the auxiliary electric machine 36 and the input shaft 24 by mechanical coupling between the gearing 60 and the first mechanical element 64. In this way, it is possible to provide torque to the input of the automated manual transmission 12, for example, for a quick synchronization of a gear change, having previously disconnected the clutch 20, or to start the internal combustion engine (having beforehand placed the automated manual transmission in the neutral position), or to provide additional torque to the internal combustion engine 16.

If necessary, depending on the operating condition of the vehicle, it may pass into the third upstream engagement condition (figure 5), wherein a mechanical connection is made between the auxiliary shaft 40 of the auxiliary electric machine 36 and the output shaft 28. Such condition is obtained by actuating the transmission selector 48 which, translating in the axial actuating stroke 52, makes the mechanical connection between the auxiliary electric machine 36 and the output shaft 28 by mechanical coupling between the gearing 60 and the second mechanical element 68. In this way, there is a possibility to provide torque at the output of the automated manual transmission 12, for example to cover a torque gap, or to achieve a regenerative braking or to provide additional torque to the internal combustion engine 16.

As may be appreciated from the foregoing, the transmission apparatus for vehicles equipped with an automated manual transmission according to the invention allows the disadvantages presented in the prior art to be overcome.

Advantageously, the transmission apparatus according to the present invention allows the auxiliary electric machine to be connected repeatedly and alternatively to the transmission in a quick, efficient and reliable manner.

The transmission apparatus does not cause a significant increase in mass and bulk of the transmission, unlike known solutions.

The present invention allows one to obtain all the functions necessary to optimize the transmission's operation, the fuel consumption and driving sensation of the vehicle with which it is provided, e.g.: transmission in exclusively electrical mode, startup of the internal combustion engine, torque gap filling during gear shifting, energy savings in the torque release phase (sailing), regenerative braking for recharging the battery pack, overboost both to increase performance in general and to compensate for the turbo lag of the possible overcharging of the internal combustion engine.

All of these functions may be obtained through a suitable and continuous strategy for connecting and disconnecting the auxiliary unit from the transmission apparatus in a fast and reliable manner.

Such a strategy includes the mechanical disconnection of the auxiliary unit from the transmission, when no intervention of the auxiliary unit is required in order to avoid dragging inertia as well as the mechanical connection of the auxiliary unit upstream or downstream of the transmission as a function of the driver's needs, of the battery pack charging status, and the conditions of the route followed by the vehicle.

Connection and disconnection through the use of a single selector is particularly fast, precise and reliable. It also simplifies management and control of the transmission since each position of the single transmission selector, i.e. the disengagement, the upstream engagement of the transmission and the downstream engagement of the transmission, allows a single possible condition of operation, automatically excluding the others.

In other words, when the transmission selector is in the upstream engagement position, it is automatically stopped from the downstream disengagement and engagement, and so on.

There is not therefore the complication of having to coordinate and synchronize multiple actuator devices by means of a dedicated control unit in order to always ensure the correct operation of the transmission.

In this way, there is not the risk that a malfunction in the system management and control may lead to a lag and a possible breakdown of the various actuators.

It should also be considered that in the state of driving in city traffic, the operations of the actuator may also be on the order of dozens per minute and always need to ensure the reliability of the transmission management.

Furthermore, the reduction in the number of actuators results in a reduction in overall bulk, weight and overall costs of the transmission apparatus.

In addition, the reduction of the number of components also reduces the likelihood of malfunctions of the apparatus.

The present invention is particularly suitable to be optimized by adapting automatically to the route to be followed with the vehicle, depending on the contingent position of the vehicle itself.

Specifically, if the vehicle is following a predetermined route, for example, one set in a satellite navigator that the vehicle is equipped with, at any moment, and in advance, it is possible to know and predict the type of route the vehicle will have to follow, estimating the speed but also the demand for torque due, for example, to the possible gradient of the road segment. In this way, it is possible to control the transmission apparatus in advance, by choosing the proper operating logic of the auxiliary electric machine, but also the gear of the automated manual transmission to be engaged. Obviously, this type of transmission apparatus management is also possible without a predetermined route to be followed, since, due to the GPS, it is possible to know the instantaneous position of the vehicle and the gradient of the road section that is being traveled on or that one is presumably faced with and so on.

This optimized management of the transmission apparatus allows a reduction of the vehicle's fuel consumption to be calibrated specifically as a function of the route taken, for example, to favor electric traction and recovery of kinetic energy during the release and/or braking phase.

A person skilled in the art, in the object of satisfying contingent and specific requirements, may make numerous modifications and variations to the transmission apparatuses for vehicles equipped with automated manual transmission described above, all of which are within the scope of the invention as defined by the following claims.

## Claims

1. Transmission apparatus (8) for vehicles equipped with an automated manual transmission (12), comprising
- an automated manual transmission (12), provided with an input shaft (24) and an output shaft (28),
- wherein the input shaft (24) is configured to be selectively connected to an internal combustion engine (16),
- wherein the output shaft (28) is configured to be mechanically connected to at least one drive wheel (32) of a vehicle,
- an auxiliary electric machine (36) having an auxiliary shaft (40) and an auxiliary transmission (44) selectively connectable to the input shaft (24) or to the output shaft (28) of the automated manual transmission (12), **characterised in that**
the auxiliary transmission (44) comprises a single transmission selector (48) movable in three positions, wherein said single transmission selector (48):
- in a first upstream engagement position, makes a mechanical connection between the auxiliary shaft (40) of the auxiliary electric machine (36) and said input shaft (24),
- in a second disengagement position, mechanically disconnects the auxiliary shaft (40) of the auxiliary electric machine (36) from said input (24) and output (28) shafts,
- in a third downstream engagement position, makes a mechanical connection between the auxiliary shaft (40) of the auxiliary electric machine (36) and said output shaft (28) .

2. Transmission apparatus (8) for vehicles equipped with an automated manual transmission (12) according to claim 1, wherein said single transmission selector (48) is movable along an actuating stroke including said first, second and third positions.

3. Transmission apparatus (8) for vehicles equipped with an automated manual transmission (12) according to claim 1 or 2, wherein said single transmission selector (48) is movable along an axial actuating stroke (52), wherein said first and third positions are located in correspondence of respective end strokes of the axial actuating stroke (52), and wherein said second position is intermediate or interposed between said end strokes.

4. Transmission apparatus (8) for vehicles equipped with an automated manual transmission (12) according to any of claims 1 to 3, wherein said single transmission selector (48) comprises a slider (56), movable between said first, second and third positions, the slider (56) being provided with a pair of gears (60) suitable to engage and disengage with corresponding first and second mechanical elements (64, 68) operatively connected, respectively, to the input shaft (24) and the output shaft (28).

5. Transmission apparatus (8) for vehicles equipped with an automated manual transmission (12) according to claim 4, wherein said gears (60) comprise frontal-engagement gears suitable to mesh with the corresponding first and second mechanical elements (64, 68) operatively connected, respectively, to the input shaft (24) and to the output shaft (28) in the first and in the third engagement positions.

6. Transmission apparatus (8) for vehicles equipped with an automated manual transmission (12) according to claim 4 or 5, wherein the auxiliary transmission (44) comprises at least a first auxiliary shaft (72) and a second auxiliary shaft (76), wherein the first auxiliary shaft (72) is integral in rotation with the first mechanical element (64) and the second auxiliary shaft (76) is integral in rotation with the second mechanical element (68).

7. Transmission apparatus (8) for vehicles equipped with an automated manual transmission (12) according to any of the preceding claims, wherein said single transmission selector (48) comprises an actuator that moves it in said three positions, the transmission apparatus (8) comprising processing and control unit that commands the actuator of the transmission selector (48) and the automated manual transmission (12).

8. Power unit (4) comprising a transmission apparatus (8) for vehicles equipped with an automated manual transmission (12) according to any of the preceding claims, and an internal combustion engine (16) having a drive shaft mechanically connectable to the input shaft (24) of the transmission apparatus (8) by means of a clutch (20).

## Patentansprüche

1. Getriebevorrichtung (8) für Fahrzeuge, welche mit einem automatisierten manuellen Getriebe (12) ausgestattet sind, umfassend:
- ein automatisiertes manuelles Getriebe (12), welches mit einer Eingangswelle (24) und einer Ausgangswelle (28) bereitgestellt ist,
- wobei die Eingangswelle (24) dazu eingerichtet ist, selektiv mit einem Verbrennungsmotor (16) verbunden zu sein,
- wobei die Ausgangswelle (28) dazu eingerichtet ist, mechanisch mit wenigstens einem Antriebsrad (32) eines Fahrzeugs verbunden zu sein,
- eine elektrische Hilfsmaschine (36), welche eine Hilfswelle (40) und ein Hilfsgetriebe (44) aufweist, welche selektiv mit der Eingangswelle (24) oder mit der Ausgangswelle (28) des automatisierten manuellen Getriebes (12) verbindbar sind,
**dadurch gekennzeichnet, dass** das Hilfsgetriebe (44) eine einzelne Getriebeauswahleinheit (48) umfasst, welche in drei Positionen bewegbar ist, wobei die einzelne Getriebeauswahleinheit (48):
- in einer ersten stromaufwärtigen Eingriffsposition eine mechanische Verbindung zwischen der Hilfswelle (40) der elektrischen Hilfsmaschine (36) und der Eingangswelle (24) herstellt,
- in einer zweiten Trennungsposition die Hilfswelle (40) der elektrischen Hilfsmaschine (36) mechanisch von den Eingangs- (24) und Ausgangs- (28) Wellen trennt,
- in einer dritten stromabwärtigen Eingriffsposition eine mechanische Verbindung zwischen der Hilfswelle (40) der elektrischen Hilfsmaschine (36) und der Ausgangswelle (28) herstellt.

2. Getriebevorrichtung (8) für Fahrzeuge, welche mit einem automatisierten manuellen Getriebe (12) ausgestattet sind, nach Anspruch 1, wobei die einzelne Getriebeauswahleinheit (48) entlang eines Betätigungshubs bewegbar ist, welcher die ersten, zweiten und dritten Positionen umfasst.

3. Getriebevorrichtung (8) für Fahrzeuge, welche mit einem automatisierten manuellen Getriebe (12) ausgestattet sind, nach Anspruch 1 oder 2, wobei die einzelne Getriebeauswahleinheit (48) entlang eines axialen Betätigungshubs (52) bewegbar ist, wobei die ersten und dritten Positionen entsprechend jeweiligen Endhüben des axialen Betätigungshubs (52) platziert sind und wobei die zweite Position dazwischen oder zwischen den Endhüben eingefügt ist.

4. Getriebevorrichtung (8) für Fahrzeuge, welche mit einem automatisierten manuellen Getriebe (12) ausgestattet sind, nach einem der Ansprüche 1 bis 3, wobei die einzelne Getriebeauswahleinheit (48) ein Gleitelement (56) umfasst, welches zwischen den ersten, zweiten und dritten Positionen bewegbar ist, wobei das Gleitelement (56) mit einem Paar von Zahnrädern (60) bereitgestellt ist, welche dazu geeignet sind, mit entsprechenden ersten und zweiten mechanischen Elementen (64, 68) einzugreifen und sich von ihnen zu trennen, welche mit der Eingangswelle (24) bzw. der Ausgangswelle (28) betriebsmäßig verbunden sind.

5. Getriebevorrichtung (8) für Fahrzeuge, welche mit einem automatisierten manuellen Getriebe (12) ausgestattet sind, nach Anspruch 4, wobei die Zahnräder (60) frontal eingreifende Zahnräder umfassen, welche dazu eingerichtet sind, mit den entsprechenden ersten und zweiten mechanischen Elementen (64, 68) zu kämmen, welche mit der Eingangswelle (24) bzw. der Ausgangswelle (28) in den ersten bzw. dritten Eingriffspositionen betriebsmäßig verbunden sind.

6. Getriebevorrichtung (8) für Fahrzeuge, welche mit einem automatisierten manuellen Getriebe (12) ausgestattet sind, nach Anspruch 4 oder 5, wobei das Hilfsgetriebe (44) wenigstens eine erste Hilfswelle (72) und eine zweite Hilfswelle (76) umfasst, wobei die erste Hilfswelle (72) integral in Rotation mit dem ersten mechanischen Element (64) ist und die zweite Hilfswelle (76) integral in Rotation mit dem zweiten mechanischen Element (68) ist.

7. Getriebevorrichtung (8) für Fahrzeuge, welche mit einem automatisierten manuellen Getriebe (12) ausgestattet sind, nach einem der vorhergehenden Ansprüche, wobei die einzelne Getriebeauswahleinheit (48) einen Aktuator umfasst, welcher sie in die drei Positionen bewegt, wobei die Getriebevorrichtung (8) eine Verarbeitungs- und Steuereinheit umfasst, welche den Aktuator der Getriebeauswahleinheit (48) und das automatisierte manuelle Getriebe (12) anweist.

8. Leistungseinheit (4), welche eine Getriebevorrichtung (8) für Fahrzeuge, welche mit einem automatisierten manuellen Getriebe (12) ausgestattet sind, nach einem der vorhergehenden Ansprüche sowie einen Verbrennungsmotor (16) umfasst, welcher eine Antriebswelle umfasst, welche mechanisch mit der Eingangswelle (24) der Getriebevorrichtung (8) mittels einer Kupplung (20) verbindbar ist.

## Revendications

1. Appareil de transmission (8) pour véhicules équipés d'une transmission manuelle automatisée (12), comprenant
- une transmission manuelle automatisée (12), dotée d'un arbre d'entrée (24) et d'un arbre de sortie (28),
- dans lequel l'arbre d'entrée (24) est configuré pour être relié sélectivement à un moteur à combustion interne (16).
- dans lequel l'arbre de sortie (28) est configuré pour être relié mécaniquement à au moins une roue motrice (32) d'un véhicule,
- une machine électrique auxiliaire (36) ayant un arbre auxiliaire (40) et une transmission auxiliaire (44) pouvant être reliée sélectivement à l'arbre d'entrée (24) ou à l'arbre de sortie (28) de la transmission manuelle automatisée (12),
**caractérisé en ce que**
la transmission auxiliaire (44) comprend un sélecteur de transmission unique (48) mobile dans trois positions, dans lequel ledit sélecteur de transmission unique (48) :
- dans une première position de mise en prise en amont, établit une liaison mécanique entre l'arbre auxiliaire (40) de la machine électrique auxiliaire (36) et ledit arbre d'entrée (24),
- dans une deuxième position de mise hors prise, déconnecte mécaniquement l'arbre auxiliaire (40) de la machine électrique auxiliaire (36) desdits arbres d'entrée (24) et de sortie (28),
- dans une troisième position de mise en prise en aval, établit une liaison mécanique entre l'arbre auxiliaire (40) de la machine électrique auxiliaire (36) et ledit arbre de sortie (28).

2. Appareil de transmission (8) pour véhicules équipés d'une transmission manuelle automatisée (12) selon la revendication 1, dans lequel ledit sélecteur de transmission unique (48) est mobile le long d'une course d'actionnement comprenant lesdites première, deuxième et troisième positions.

3. Appareil de transmission (8) pour véhicules équipés d'une transmission manuelle automatisée (12) selon la revendication 1 ou 2, dans lequel ledit sélecteur de transmission unique (48) est mobile le long d'une course d'actionnement axiale (52), dans lequel lesdites première et troisième positions sont situées en correspondance de courses d'extrémité respectives de la course d'actionnement axiale (52), et dans lequel ladite deuxième position est intermédiaire ou interposée entre lesdites courses d'extrémité.

4. Appareil de transmission (8) pour véhicules équipés d'une transmission manuelle automatisée (12) selon l'une quelconque des revendications 1 à 3, dans lequel ledit sélecteur de transmission unique (48) comprend un coulisseau (56), mobile entre lesdites première, deuxième et troisième positions, le coulisseau (56) étant doté d'une paire d'engrenages (60) adaptés pour se mettre en et hors prise avec des premier et deuxième éléments mécaniques (64, 68) correspondants reliés fonctionnellement, respectivement, à l'arbre d'entrée (24) et à l'arbre de sortie (28).

5. Appareil de transmission (8) pour véhicules équipés d'une transmission manuelle automatisée (12) selon la revendication 4, dans lequel lesdits engrenages (60) comprennent des engrenages de mise en prise frontale adaptés pour s'engrener avec les premier et deuxième éléments mécaniques (64, 68) correspondants reliés fonctionnellement, respectivement, à l'arbre d'entrée (24) et à l'arbre de sortie (28) dans la première et dans la troisième positions de mise en prise.

6. Appareil de transmission (8) pour véhicules équipés d'une transmission manuelle automatisée (12) selon la revendication 4 ou 5, dans lequel la transmission auxiliaire (44) comprend au moins un premier arbre auxiliaire (72) et un deuxième arbre auxiliaire (76), dans lequel le premier arbre auxiliaire (72) est solidaire en rotation avec le premier élément mécanique (64) et le deuxième arbre auxiliaire (76) est solidaire en rotation avec le deuxième élément mécanique (68).

7. Appareil de transmission (8) pour véhicules équipés d'une transmission manuelle automatisée (12) selon l'une quelconque des revendications précédentes, dans lequel ledit sélecteur de transmission unique (48) comprend un actionneur qui le déplace dans lesdites trois positions, l'appareil de transmission (8) comprenant une unité de traitement et de commande qui commande l'actionneur du sélecteur de transmission (48) et la transmission manuelle automatisée (12).

8. Unité de puissance (4) comprenant un appareil de transmission (8) pour véhicules équipés d'une transmission manuelle automatisée (12) selon l'une quelconque des revendications précédentes, et un moteur à combustion interne (16) ayant un arbre d'entraînement pouvant être relié mécaniquement à l'arbre d'entrée (24) de l'appareil de transmission (8) au moyen d'un embrayage (20).
